# EUROPÄISCHE PATENTSCHRIFT

(11) **EP 3 759 644 B1**
(45) Veröffentlichungstag und Bekanntmachung des Hinweises auf die Patenterteilung: **23.08.2023**
(21) Anmeldenummer: 19720391.2
(22) Anmeldetag: 08.04.2019
(51) Int. Cl.: G06V 10/42, G06V 10/75, G06V 20/59, G06V 40/10

(54) **IDENTIFIZIEREN UNBESETZTER SITZPLÄTZE AUF BASIS DER DETEKTION EINER SICH WIEDERHOLENDEN TEXTUR**
IDENTIFICATION OF FREE SEATS BASED ON THE DETECTION OF A REPEATED TEXTURE
IDENTIFICATION DE SIÈGES INOCCUPÉS SUR LA BASE DE LA DÉTECTION D'UNE TEXTURE RÉPÉTÉE

(30) Priorität: 13.04.2018 DE 102018205668
(43) Veröffentlichungstag der Anmeldung: 06.01.2021
(73) Patentinhaber: Siemens Mobility GmbH, 81739 München (DE)
(72) Erfinder: KETABDAR, Hamed, 10707 Berlin (DE); SCHÜSSLER, Michael, 12305 Berlin (DE)
(74) Vertreter: Siemens Patent Attorneys
(86) Internationale Anmeldenummer: PCT/EP2019/058794
(87) Internationale Veröffentlichungsnummer: WO 2019/197330

(56) Entgegenhaltungen:
- WO-A1-01/04842
- US-A1- 2006 209 072
- US-A1- 2013 051 625

## Beschreibung

Die Erfindung betrifft ein Verfahren zum Identifizieren von unbesetzten Sitzplätzen. Weiterhin betrifft die Erfindung eine Besetzungsdetektionsvorrichtung. Überdies betrifft die Erfindung ein Personentransportfahrzeug.

Das Erkennen von unbesetzten Sitzplätzen in öffentlichen Verkehrsmitteln kann potentiellen Fahrgästen dabei helfen, sich gleichmäßiger in öffentlichen Transportmitteln zu verteilen, so dass der Komfort für die Fahrgäste erhöht wird. Fahrgäste können auch vorab, zum Beispiel vor der Ankunft eines Busses oder eines Zugs, darüber informiert werden, in welchem Teil des öffentlichen Verkehrsmittels sich die meisten unbesetzten Sitzplätze befinden. Mit dieser Information versehen können sich die Fahrgäste im Wartebereich an einer geeigneten Position einfinden, um den Teilbereich des öffentlichen Verkehrsmittels mit den meisten unbesetzten Sitzplätzen zu besteigen. Zudem können Informationen über die Positionen unbesetzter Sitzplätze für Reservierungsdienste, Verwaltungsdienste und Fahrplandienste für den öffentlichen Verkehr verwendet werden.

Ein bekanntes Verfahren zur Identifizierung von unbesetzten Sitzplätzen beruht auf dem Detektieren der unbesetzten Sitzplätze mit Hilfe von Überwachungskameras und einer Anwendung von modellbasierten Identifizierungsverfahren auf die erzeugten Bilddaten. Die dabei eingesetzten Modelle werden zum Beispiel anhand von mit einem Ergebnis gekennzeichneten Trainingsdaten durch maschinelle Lernverfahren trainiert. Bei einem solchen Trainingsprozess werden Trainingsdaten von unbesetzten und besetzten Sitzplätzen erzeugt. Allerdings werden zum Training sehr umfangreiche Datenmengen benötigt.

Ein effektiverer Ansatz begründet sich in der Beobachtung, dass Sitze in öffentlichen Verkehrsmitteln meist gemustert sind, ihre Oberfläche also aus einer regelmäßigen Textur besteht. Jeder Sitz weist die gleiche Regelmäßigkeit auf und ähnelt allen anderen Sitzen stark. Besetzte Sitze hingegen haben sehr unterschiedliches und unregelmäßiges Aussehen, je nachdem was sich auf dem jeweiligen Sitz befindet. Mithin ergibt sich ein Problem mit zwei unterschiedlichen Klassen, von denen eine der beiden Klassen nur eine minimale Variabilität aufweist und die andere Klasse eine sehr ausgeprägte Variabilität umfasst. Solch eine Verteilung eignet sich nicht besonders für Klassifikatoren, die mit Hilfe von maschinellen Lernverfahren trainiert wurden. Außerdem erfordern solche Verfahren, welche auf Trainingsdaten beruhen, umfangreiche Mengen von Trainingsdaten mit einer möglichst hohen Variabilität. Die Trainingsdatenbasis sollte für neue Anwendungsfälle, neue Sitze und neue Züge jeweils neu erzeugt werden. Umfangreiche Datensammlungen pro Anwendungsfall können zu hohen Kosten und einem hohen Aufwand bei der Implementierung von Sitzplatzdetektions-Applikationen führen.

In US 2013/ 0 051 625 A1 werden ein Verfahren und ein System zur Überwachung, ob ein vorderer Sitzplatz in einem Kraftfahrzeug besetzt ist oder nicht, beschrieben. Dabei werden Umrisslinien des Sitzes ermittelt und analysiert.

In US 2006/ 0 209 072 A1 wird eine Klassifizierung von Merkmalen von Bilddaten, welche eine auf einem Sitzplatz eines Fahrzeugs befindliche Person zeigen, beschrieben. Die Klassifizierung erfolgt mit Hilfe einer probabilistischen Struktur, wie zum Beispiel eines bayesschen Netzes.

Es besteht also die Aufgabe, ein effizienteres und weniger aufwändiges Verfahren und eine entsprechend Vorrichtung zur Identifizierung unbesetzter Sitzplätze in Personentransportmitteln anzugeben.

Diese Aufgabe wird durch ein Verfahren zum Identifizieren von unbesetzten Sitzplätzen gemäß Patentanspruch 1, eine Besetzungsdetektionsvorrichtung gemäß Patentanspruch 9 und ein Personentransportfahrzeug gemäß Patentanspruch 10 gelöst.

Bei dem erfindungsgemäßen Verfahren zum Identifizieren eines unbesetzten Sitzplatzes werden Bilddaten von einem Sitzplatz erfasst, die den Sitzplatz abbilden. Diese werden zum Beispiel mit Hilfe einer Bildaufnahmeeinheit erfasst. Die Bildaufnahmeeinheit kann zum Beispiel eine Überwachungskamera umfassen, die bereits aus Sicherheitsgründen in den meisten Fahrzeugen installiert ist. Auf Basis der erfassten Bilddaten wird eine mathematische Bildanalyse bezüglich Sitzplatztexturen durchgeführt, wobei Analysedaten erzeugt werden, welche Informationen darüber umfassen, ob der Sitzplatz sich wiederholende Muster von Sitzplatztexturen aufweist. Die mathematische Bildanalyse kann zum Beispiel eine mathematische Transformation, vorzugsweise eine Integraltransformation oder eine diskrete Transformation umfassen, mit der periodische Eigenschaften der Sitzplatztexturen erkennbar gemacht werden können. Zur Erzeugung der Analysedaten wird eine Fouriertransformation, vorzugsweise eine zweidimensionale Fouriertransformation, besonders bevorzugt eine diskrete zweidimensionale Fouriertransformation, auf die erfassten Bilddaten angewendet. Dabei werden die erfassten Bilddaten in den Frequenzraum transformiert. Die Analysedaten werden auf Basis eines Vergleichs mit transformierten Musterbilddaten erzeugt. Vorteilhaft werden mit Hilfe einer Fouriertransformation periodische Strukturen von Texturen eines Sitzes besonders gut erkennbar gemacht. Da die Bilddaten üblicherweise zweidimensional sind, werden im Rahmen der Bildanalyse besonders bevorzugt zweidimensionale fouriertransformierte Bilddaten erzeugt. Auf diese Weise können periodische Strukturen von Texturen in zwei Dimensionen bei der Analyse berücksichtigt werden. Die erkannten Texturen werden dann zur Identifizierung eines unbesetzten Sitzplatzes genutzt. Alternativ kann die mathematische Bildanalyse auch eine Faltungsoperation umfassen, mit der ebenfalls periodisch wiederkehrende Muster in den Sitzplatztexturen detektiert werden.

Die mathematische Analyse kann auch einen Vergleich der transformierten Bilddaten mit einem Satz von transformierten Musterbilddaten, welche einem unbesetzten Sitzplatz zugeordnet sind, umfassen. Diese transformierten Musterbilddaten können auf Basis von einmalig erfassten Musterbilddaten von unbesetzten Sitzplätzen durch die beschriebene mathematische Transformation erzeugt werden. Überdies wird auf Basis der Analysedaten ermittelt, ob der Sitzplatz unbesetzt ist.

Zur Erzeugung der transformierten Musterbilddaten genügen einige wenige Bilddatensätze von unbesetzten Sitzplätzen da die Analysedaten von unterschiedlichen Bildaufnahmen von unbesetzten Sitzplätzen einander sehr ähnlich sind.

Vorteilhaft unterscheiden sich die Analysedaten von unbesetzten Sitzplätzen sehr stark von Analysedaten von besetzten Sitzplätzen, so dass auch bei einer unterschiedlichen Besetzung der Sitzplätze, beispielsweise durch Personen sehr unterschiedlicher Größe eindeutig ermittelt werden kann, ob ein Sitzplatz besetzt ist oder nicht. Die beschriebene mathematische Bildanalyse lässt sich im Vergleich zu auf maschinellen Lernverfahren basierenden Modellen mit wenig Rechenaufwand realisieren. Mithin werden für das erfindungsgemäße Verfahren weniger Rechenressourcen benötigt, so dass der Aufwand für das erfindungsgemäße Verfahren geringer ist. Vorteilhaft wird kein umfangreicher Trainingsaufwand zur Erzeugung von Modellen benötigt, so dass eine Realisierung des erfindungsgemäßen Verfahrens im Vergleich zu herkömmlichen Vorgehensweisen vereinfacht ist.

Die erfindungsgemäße Besetzungsdetektionsvorrichtung weist eine Eingangsschnittstelle zum Empfangen von Bilddaten von einem Sitzplatz, die den Sitzplatz abbilden, auf. Die Bilddaten können zum Beispiel von einer Bildaufnahmeeinheit von dem Sitzplatz aufgenommen werden. Überdies umfasst die erfindungsgemäße Besetzungsdetektionsvorrichtung eine Analyseeinheit zum Durchführen einer mathematischen Bildanalyse auf Basis der erfassten Bilddaten bezüglich Sitzplatztexturen, wobei Analysedaten erzeugt werden, welche Informationen darüber umfassen, ob der Sitzplatz sich wiederholende Muster von Sitzplatztexturen aufweist. Die mathematische Bildanalyse umfasst eine mathematische Transformation, vorzugsweise eine Integraltransformation oder eine diskrete Transformation, mit der periodische Eigenschaften der Sitzplatztexturen erkennbar gemacht werden. Zur Erzeugung der Analysedaten wird eine Fouriertransformation, vorzugsweise eine zweidimensionale Fouriertransformation, besonders bevorzugt eine diskrete zweidimensionale Fouriertransformation, auf die erfassten Bilddaten angewendet. Dabei werden die erfassten Bilddaten in den Frequenzraum transformiert. Die Analysedaten werden auf Basis eines Vergleichs mit transformierten Musterbilddaten erzeugt. Alternativ umfasst die mathematische Bildanalyse eine Faltungsoperation, mit der periodisch wiederkehrende Muster in den Sitzplatztexturen detektiert werden. Teil der erfindungsgemäßen Besetzungsdetektionsvorrichtung ist auch eine Ermittlungseinheit zum Ermitteln, dass der Sitzplatz unbesetzt ist, wenn auf Basis der Analysedaten sich wiederholende Muster von Sitzplatztexturen detektiert werden.

Das erfindungsgemäße Personentransportfahrzeug, vorzugsweise ein Schienenfahrzeug, weist die erfindungsgemäße Besetzungsdetektionsvorrichtung auf. Außerdem umfasst das erfindungsgemäße Personentransportfahrzeug eine Mehrzahl von Sitzplätzen und eine Bildaufnahmeeinheit zum Erfassen von Bilddaten von den Sitzplätzen. Die Bildaufnahmeeinheit ist vorzugsweise mit der Besetzungsdetektionsvorrichtung über einen Kommunikationskanal verbunden, um die Bilddaten an die Besetzungsdetektionsvorrichtung zu übermitteln. Das erfindungsgemäße Personentransportfahrzeug teilt die Vorteile der erfindungsgemäßen Besetzungsdetektionsvorrichtung.

Teile der erfindungsgemäßen Besetzungsdetektionsvorrichtung können zum überwiegenden Teil in Form von Softwarekomponenten ausgebildet sein. Dies betrifft insbesondere Teile der Analyseeinheit und der Ermittlungseinheit. Grundsätzlich können diese Komponenten aber auch zum Teil, insbesondere wenn es um besonders schnelle Berechnungen geht, in Form von softwareunterstützter Hardware, beispielsweise FPGAs oder dergleichen, realisiert sein. Ebenso können die benötigten Schnittstellen, beispielsweise wenn es nur um eine Übernahme von Daten aus anderen Softwarekomponenten geht als Softwareschnittstellen ausgebildet sein. Sie können aber auch als hardwaremäßig aufgebaute Schnittstellen ausgebildet sein, die durch geeignete Software angesteuert werden.

Eine teilweise softwaremäßige Realisierung hat den Vorteil, dass auch schon bisher in Personentransportfahrzeugen genutzte Rechnersysteme auf einfache Weise durch ein Software-Update nachgerüstet werden können, um auf die erfindungsgemä-ße Weise zu arbeiten. Insofern wird die Aufgabe auch durch ein entsprechendes Computerprogrammprodukt mit einem Computerprogramm gelöst, welches direkt in eine Speichereinrichtung eines solchen Rechnersystems ladbar ist, mit Programmabschnitten, um alle Schritte des Verfahrens zum Identifizieren eines unbesetzten Sitzplatzes auszuführen, wenn das Computerprogramm in dem Rechnersystem ausgeführt wird.

Ein solches Computerprogrammprodukt kann neben dem Computerprogramm gegebenenfalls zusätzliche Bestandteile, wie z.B. eine Dokumentation und/oder zusätzliche Komponenten, auch Hardware-Komponenten, wie z.B. Hardware-Schlüssel (Dongles etc.) zur Nutzung der Software, umfassen.

Zum Transport zur Speichereinrichtung des Rechnersystems und/oder zur Speicherung an dem Rechnersystem kann ein computerlesbares Medium, beispielsweise ein Memorystick, eine Festplatte oder ein sonstiger transportabler oder fest eingebauter Datenträger dienen, auf welchem die von einer Rechnereinheit einlesbaren und ausführbaren Programmabschnitte des Computerprogramms gespeichert sind. Die Rechnereinheit kann z.B. hierzu einen oder mehrere zusammenarbeitende Mikroprozessoren oder dergleichen aufweisen.

Die abhängigen Ansprüche sowie die nachfolgende Beschreibung enthalten jeweils besonders vorteilhafte Ausgestaltungen und Weiterbildungen der Erfindung. Dabei können insbesondere die Ansprüche einer Anspruchskategorie auch analog zu den abhängigen Ansprüchen einer anderen Anspruchskategorie und deren Beschreibungsteilen weitergebildet sein.

In einer Ausgestaltung des erfindungsgemäßen Verfahrens zum Identifizieren eines unbesetzten Sitzplatzes wird als mathematische Bildanalyse zur Erzeugung der Analysedaten eine Korrelationsoperation auf die erfassten Bilddaten angewendet, wobei als Analysedaten Korrelations-Analysedaten erzeugt werden.

Da bei dem Verfahren Bilder verarbeitet werden, wird als Korrelationsoperation vorzugsweise eine zweidimensionale Korrelationsoperation eingesetzt.

Bei der Nutzung einer Korrelationsoperation zur Erzeugung von Analysedaten können Korrelationen auf Basis periodischer Strukturen von Texturen von Sitzen detektiert werden, welche zur Identifizierung unbesetzter Sitzplätze verwendet werden können.

In einer Ausgestaltung des erfindungsgemäßen Verfahrens zum Identifizieren eines unbesetzten Sitzplatzes wird zur Erzeugung der Analysedaten als Korrelationsoperation eine Kreuzkorrelationsoperation, vorzugsweise eine diskrete Kreuzkorrelationsoperation, auf die erfassten Bilddaten angewendet. Die Kreuzkorrelationsoperation umfasst anschaulich ausgedrückt einen Vergleich zwischen erfassten Bilddaten und Musterbilddaten.

Da bei dem Verfahren Bilder verarbeitet werden, wird als Kreuzkorrelationsoperation vorzugsweise eine zweidimensionale Kreuzkorrelationsoperation eingesetzt, um Korrelationen in zwei Dimensionen zu erfassen.

Auch bei der Nutzung einer Kreuzkorrelationsoperation zur Erzeugung von Analysedaten können periodische Strukturen von Texturen von Sitzen detektiert werden, welche zur Identifizierung unbesetzter Sitzplätze verwendet werden können. Bei einer Kreuzkorrelation kann aufgrund der Anwendung von Musterbilddaten in der Musterdetektion Vorwissen einfließen, welches eine Detektion von bekannten Texturmustern erleichtert.

Als Korrelationsoperation kann zudem auch eine Autokorrelation, vorzugsweise eine zweidimensionale Autokorrelation, auf die erfassten Bilddaten angewendet werden. Bei einer Autokorrelation erfolgt die Ermittlung einer Korrelation von räumlich versetzten Texturmustern miteinander. Bei dieser Variante werden keine Musterbilddaten benötigt. Dadurch lässt sich das Verfahren flexibler an unterschiedliche Problemstellungen anpassen. Insbesondere muss vorab nicht die Struktur der Texturmuster bekannt sein.

Berechnungsverfahren zur Berechnung der beschriebenen Transformationen und Korrelationen sind zum Beispiel in "Digital Image Processing (2nd Ed)", Rafael C. Gonzalez and Richard E. Woods, DIGITAL IMAGE PROCESSING, Prentice Hall, 2002 beschrieben.

In einer Ausgestaltung des erfindungsgemäßen Verfahrens zum Identifizieren eines unbesetzten Sitzplatzes umfasst der Vergleich das Ermitteln einer Distanz zwischen den transformierten Bilddaten und den transformierten Musterbilddaten. Das Ergebnis des beschriebenen Transformationsvorgangs kann zum Beispiel eine Matrix sein. Die Matrix wird in einen Vektor umgewandelt, indem die Matrix durchlaufen wird und die Werte in den Vektor eingetragen werden. Die erzeugten Vektoren der transformierten Bilddaten und der Musterbilddaten können dann miteinander verglichen werden, wobei ein Abstand zwischen den beiden Vektoren berechnet wird.

Ein solcher Abstand bzw. eine solche Distanz kann als Maß für einen Unterschied oder eine Ähnlichkeit zwischen den bei der Sitzplatzüberwachung auf Bilddaten basierenden transformierten Bilddaten und den Musterbilddaten genutzt werden. Eine solche Distanz kann zum Beispiel eine euklidische Distanz umfassen.

In einer vorteilhaften Variante des erfindungsgemäßen Verfahrens zum Identifizieren eines unbesetzten Sitzplatzes zeigt eine geringe Distanz einen unbesetzten Sitzplatz an und zeigt eine große Distanz einen besetzten Sitzplatz an. Vorteilhaft kann auf Basis einer einfachen Kenngröße zwischen einem besetzten und einem unbesetzten Sitzplatz unterschieden werden. Eine solche Vorgehensweise ist mit einem niedrigen Rechenaufwand verbunden.

Besonders bevorzugt gibt die Größe des Werts der Distanz eine Information darüber an, in welchem Ausmaß der Sitzplatz besetzt ist. Vorteilhaft kann bei dieser Ausgestaltung für den Fall, dass ein Sitzplatz als besetzt identifiziert wurde, eine Aussage darüber getroffen werden, wie sehr dieser besetzt ist. Beispielsweise kann auf Basis dieser Information abgeschätzt werden, dass ein Sitzplatz nur durch eine Tasche oder einen Gegenstand belegt ist, der auch an anderer Stelle unterzubringen ist. Auf diese Weise können mehr freie Sitzplätze erkannt werden und damit mehr Fahrgästen ein einfaches Auffinden von freien Sitzplätzen ermöglicht werden.

In einer Ausgestaltung des erfindungsgemäßen Verfahrens zum Identifizieren eines unbesetzten Sitzplatzes erfolgt eine zusätzliche Identifizierung eines unbesetzten Sitzplatzes mit Hilfe eines sogenannten Matchingprozesses mit einem Modell, welches durch ein maschinelles Lernverfahren trainiert wurde. Bei dieser Variante erfolgt also die Identifizierung durch eine Kombination unterschiedlicher Herangehensweisen, so dass die Identifizierung besonders sicher und exakt gestaltet werden kann. Vorteilhaft kann auch das Lernen des Modells mit dem maschinellen Lernverfahren anhand einer reduzierten Datenbasis erfolgen, deren Erzeugung weniger Aufwand erfordert. Die daraus resultierende größere Ungenauigkeit kann durch die Kombination mit der erfindungsgemäßen Vorgehensweise reduziert werden, so dass trotz geringeren Aufwands eine vergleichbare Genauigkeit erzielt wird, wie wenn bei dem maschinellen Lernverfahren eine umfangreichere Datenbasis als Trainingsdatenbasis genutzt wird.

Die Erfindung wird im Folgenden unter Hinweis auf die beigefügten Figuren anhand von Ausführungsbeispielen noch einmal näher erläutert. Es zeigen:
- FIG 1: ein Flussdiagramm, welches ein Verfahren zum Identifizieren eines unbesetzten Sitzplatzes gemäß einem Ausführungsbeispiel der Erfindung veranschaulicht,
- FIG 2: eine schematische Darstellung einer Besetzungsdetektionsvorrichtung gemäß einem Ausführungsbeispiel der Erfindung,
- FIG 3: eine schematische Darstellung eines Personentransportfahrzeugs gemäß einem Ausführungsbeispiel der Erfindung.

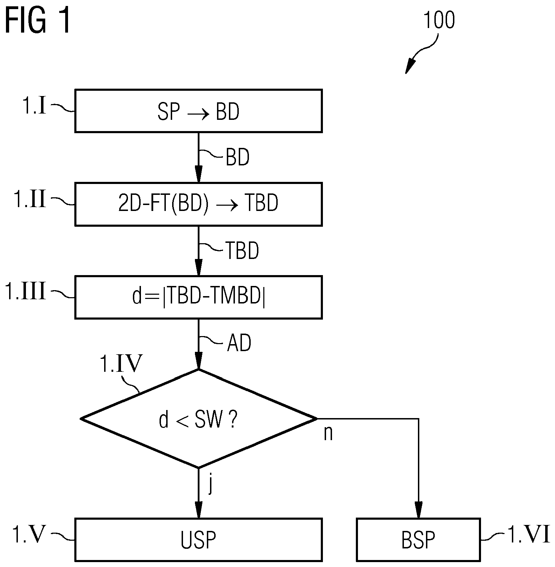

In FIG 1 ist ein Flussdiagramm 100 gezeigt, welches ein Verfahren zum Identifizieren eines unbesetzten Sitzplatzes eines Personentransportfahrzeugs gemäß einem Ausführungsbeispiel der Erfindung veranschaulicht. Bei dem Schritt 1.1 werden zunächst von einer Überwachungskamera Bilddaten BD von einem Sitzplatz SP aufgenommen. Nachfolgend werden bei dem Schritt 1.II auf Basis der erfassten Bilddaten BD transformierte Bilddaten TBD erzeugt, wobei die Bilddaten BD bei dem Schritt 1.II mit Hilfe einer zweidimensionalen Fouriertransformation 2D-FT(BD) in den Frequenzraum transformiert werden.

Bei dem Schritt 1.III wird die Bildanalyse auf Basis der erzeugten transformierten Bilddaten TBD weitergeführt. Bei diesem Schritt werden die transformierten Bilddaten TBD im Frequenzraum mit transformierten Musterbilddaten TMBD verglichen, die ebenfalls im Frequenzraum vorliegen. Bei dem Vergleich wird ein euklidischer Abstand d zwischen den transformierten Bilddatendaten TBD und den transformierten Musterbilddaten TMBD berechnet. Wie bereits erwähnt, können hierfür Matrixdaten in einen Vektor umgewandelt werden. Anschließend wird bei dem Schritt 1.IV auf Basis des Abstands d als Analysedaten AD geprüft, ob der bei dem Schritt 1.III ermittelte Abstandswert d einen vorbestimmten Schwellwert SW unterschreitet. Der vorbestimmte Schwellwert SW kann zum Beispiel experimentell bestimmt werden und wird dazu genutzt, zu entscheiden, ob ein bildlich überwachter Sitzplatz unbesetzt oder besetzt ist. Wird bei dem Schritt 1.IV ermittelt, dass der Abstandswert d kleiner als ein vorbestimmter Schwellwert SW ist, was in FIG 1 mit "j" gekennzeichnet ist, so wird zu dem Schritt 1.V übergegangen, bei dem als Ergebnis festgelegt wird, dass der überwachte Sitzplatz ein unbesetzter Sitzplatz USP ist. Wird bei dem Schritt 1.IV ermittelt, dass der Abstandswert d größer oder gleich dem vorbestimmten Schwellwert ist, so wird zu dem Schritt 1.VI übergegangen, bei dem als Ergebnis festgelegt wird, dass der überwachte Sitzplatz ein besetzter Sitzplatz BSP ist.

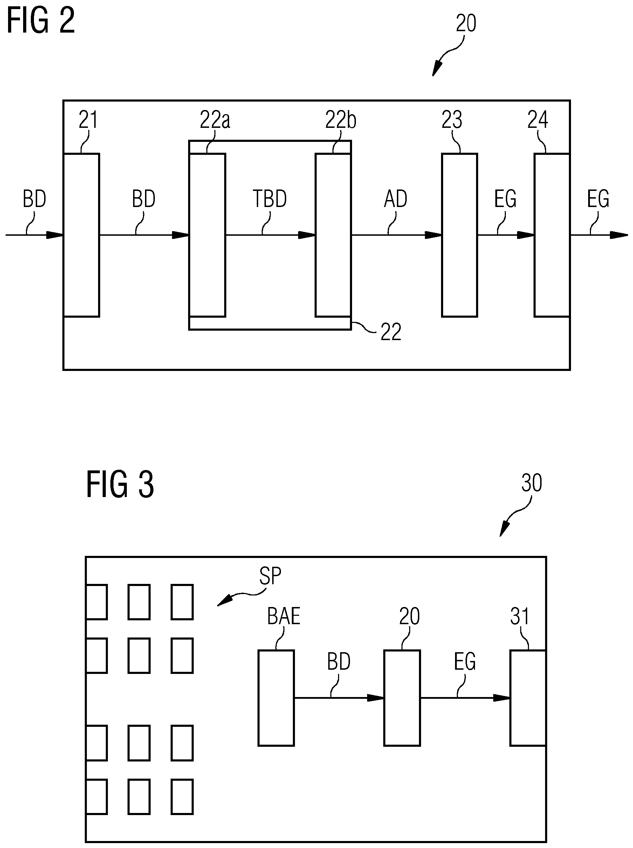

In FIG 2 ist ein eine Besetzungsdetektionsvorrichtung 20 gemäß einem Ausführungsbeispiel der Erfindung schematisch dargestellt. Die Besetzungsdetektionsvorrichtung 20 weist eine Eingangsschnittstelle 21, eine Analyseeinheit 22 und eine Ermittlungseinheit 23 sowie eine Ausgangsschnittstelle 24 auf.

Die Eingangsschnittstelle 21 ist dazu eingerichtet, Bilddaten BD von einer Überwachungskamera BAE (siehe FIG 3) zu empfangen. Die Bilddaten BD bilden einen Sitzplatz in einem Personentransportfahrzeug, wie zum Beispiel einem Personen transportierenden Schienenfahrzeug, ab. Die Bilddaten BD werden an die genannte Analyseeinheit 22 übermittelt. Die Analyseeinheit 22 umfasst eine Transformationseinheit 22a, die auf Basis der Bilddaten BD mit Hilfe einer zweidimensionalen Fouriertransformation der Bilddaten BD in den Frequenzraum transformierte Bilddaten TBD erzeugt. Die transformierten Bilddaten TBD werden an eine von der Analyseeinheit 22 umfasste Vergleichseinheit 22b übermittelt, die einen euklidischen Abstand d zwischen den transformierten Bilddaten TBD und abgespeicherten transformierten Musterbilddaten TMBD ermittelt. Der ermittelte Abstand d bildet in diesem Ausführungsbeispiel die Analysedaten AD und dies Daten AD werden an die genannte Ermittlungseinheit 23 weitergegeben, die auf Basis des ermittelten Abstands d ein Ergebnis EG ermittelt, welches eine Information darüber umfasst, ob der Sitzplatz unbesetzt ist oder nicht. Das Ergebnis wird über die Ausgangsschnittstelle 24 ausgegeben.

In FIG 3 ist ein Schienenfahrzeug 30 gemäß einem Ausführungsbeispiel der Erfindung schematisch gezeigt. Das Schienenfahrzeug 30 weist eine Mehrzahl von Sitzplätzen SP für Fahrgäste auf. Weiterhin umfasst das Schienenfahrzeug 30 eine Bildaufnahmeeinheit BAE, in diesem Fall eine Überwachungskamera, mit der die Sitzplätze SP durch das Aufnehmen von Bilddaten BD überwacht werden. Die Bilddaten BD werden an eine von dem Schienenfahrzeug 30 ebenfalls umfasste Besetzungsdetektionsvorrichtung 20 übermittelt, das auf Basis der Bilddaten, auf die in FIG 1 und FIG 2 veranschaulichte Art und Weise Ergebnisdaten EG erzeugt, die eine Information darüber umfassen, ob die überwachten Sitzplätze SP unbesetzt sind oder besetzt. Die Ergebnisdaten EG werden an eine Kommunikationseinheit 31 des Schienenfahrzeugs 30 übermittelt. Die Kommunikationseinheit 31 kann zum Beispiel die Anzahl und Position freier Sitzplätze an mobile Endgeräte von Fahrgästen übermitteln, so dass diese sich besser in dem Schienenfahrzeug verteilen können.

Es wird abschließend noch einmal darauf hingewiesen, dass es sich bei den vorbeschriebenen Verfahren und Vorrichtungen lediglich um bevorzugte Ausführungsbeispiele der Erfindung handelt und dass die Erfindung vom Fachmann variiert werden kann, ohne den Bereich der Erfindung zu verlassen, soweit er durch die Ansprüche vorgegeben ist. Es wird der Vollständigkeit halber auch darauf hingewiesen, dass die Verwendung der unbestimmten Artikel "ein" bzw. "eine" nicht ausschließt, dass die betreffenden Merkmale auch mehrfach vorhanden sein können. Ebenso schließt der Begriff "Einheit" nicht aus, dass diese aus mehreren Komponenten besteht, die gegebenenfalls auch räumlich verteilt sein können.

## Patentansprüche

1. Verfahren zum Identifizieren eines unbesetzten Sitzplatzes (SP) in einem Personentransportfahrzeug (30) mit einer Mehrzahl von Sitzplätzen (SP), aufweisend die Schritte:
- Erfassen von Bilddaten (BD), welche einen Sitzplatz (SP) abbilden,
- Durchführen einer mathematischen Bildanalyse auf Basis der erfassten Bilddaten (BD), wobei mit Hilfe der mathematischen Bildanalyse Analysedaten (AD) erzeugt werden, **gekennzeichnet durch** die Schritte:
- Durchführen der mathematischen Bildanalyse bezüglich Sitzplatztexturen, wobei die erzeugten Analysedaten (AD) Informationen darüber umfassen, ob der Sitzplatz sich wiederholende Muster von Sitzplatztexturen aufweist,
- wobei die mathematische Bildanalyse
- eine mathematische Transformation, vorzugsweise eine Integraltransformation oder eine diskrete Transformation umfasst, mit der periodische Eigenschaften der Sitzplatztexturen erkennbar gemacht werden,
- wobei die mathematische Transformation eine Fouriertransformation (2D-FT(BD)) der erfassten Bilddaten (BD) umfasst, wobei die erfassten Bilddaten (BD) in den Frequenzraum transformiert werden, und
- wobei die Analysedaten (AD) auf Basis eines Vergleichs der transformierten Bilddaten (TBD) mit transformierten Musterbilddaten (TMBD) erzeugt werden,
oder
- eine Faltungsoperation umfasst, mit der periodisch wiederkehrende Muster in den Sitzplatztexturen detektiert werden,
- Ermitteln, dass der Sitzplatz (SP) unbesetzt ist, wenn auf Basis der Analysedaten (AD) sich wiederholende Muster von Sitzplatztexturen detektiert werden.

2. Verfahren nach Anspruch 1, wobei als mathematische Bildanalyse zur Erzeugung der Analysedaten (AD) eine Korrelationsoperation auf die erfassten Bilddaten (BD) angewendet wird, wobei als Analysedaten (AD) Korrelations-Analysedaten erzeugt werden.

3. Verfahren nach Anspruch 2, wobei die Korrelationsoperation eine Kreuzkorrelationsoperation umfasst.

4. Verfahren nach Anspruch 2, wobei die Korrelationsoperation eine Autokorrelationsoperation umfasst.

5. Verfahren nach Anspruch 1, wobei der Vergleich das Ermitteln einer Distanz (d) zwischen den transformierten Bilddaten (TBD) und den transformierten Musterbilddaten (TMBD) umfasst.

6. Verfahren nach Anspruch 5, wobei die Distanz (d) eine euklidische Distanz (ED) umfasst.

7. Verfahren nach Anspruch 5 oder 6, wobei eine geringe Distanz (d) einen unbesetzten Sitzplatz (USP) anzeigt und eine große Distanz (d) einen besetzten Sitzplatz (BSP) anzeigt.

8. Verfahren nach einem der Ansprüche 5 bis 7, wobei die Grö-ße des Werts der Distanz (d) eine Information darüber gibt, in welchem Ausmaß der Sitzplatz (SP) besetzt ist.

9. Besetzungsdetektionsvorrichtung (20) zum Identifizieren eines unbesetzten Sitzplatzes (SP) in einem Personentransportfahrzeug (30) mit einer Mehrzahl von Sitzplätzen (SP), aufweisend:
- eine Eingangsschnittstelle (21) zum Empfangen von Bilddaten (BD), welche einen Sitzplatz (SP) abbilden,
- eine Analyseeinheit (22) zum Durchführen einer mathematischen Bildanalyse auf Basis der erfassten Bilddaten (BD), wobei mit Hilfe der mathematischen Bildanalyse Analysedaten (AD) erzeugt werden,
**gekennzeichnet durch**,
- Ausbildung der Analyseeinheit (22) zum Durchführen der mathematischen Bildanalyse bezüglich Sitzplatztexturen, wobei die erzeugten Analysedaten (AD) Informationen darüber umfassen, ob der Sitzplatz sich wiederholende Muster von Sitzplatztexturen aufweist,
- wobei die mathematische Bildanalyse
- eine mathematische Transformation, vorzugsweise eine Integraltransformation oder eine diskrete Transformation umfasst, mit der periodische Eigenschaften der Sitzplatztexturen erkennbar gemacht werden,
- wobei die mathematische Transformation eine Fouriertransformation (2D-FT(BD)) der erfassten Bilddaten (BD) umfasst, wobei die erfassten Bilddaten (BD) in den Frequenzraum transformiert werden, und
- wobei die Analysedaten (AD) auf Basis eines Vergleichs der transformierten Bilddaten (TBD) mit transformierten Musterbilddaten (TMBD) erzeugt werden,
oder
- eine Faltungsoperation umfasst, mit der periodisch wiederkehrende Muster in den Sitzplatztexturen detektiert werden,
- eine Ermittlungseinheit (24) zum Ermitteln, dass der Sitzplatz (SP) unbesetzt ist, wenn auf Basis der Analysedaten (AD) sich wiederholende Muster von Sitzplatztexturen detektiert werden.

10. Personentransportfahrzeug (30), vorzugsweise Personen transportierendes Schienenfahrzeug, aufweisend
- eine Besetzungsdetektionsvorrichtung (20) nach Anspruch 9,
- eine Mehrzahl von Sitzplätzen (SP),
- eine Bildaufnahmeeinheit (BAE) zum Erfassen von Bilddaten (BD) von den Sitzplätzen (SP).

11. Computerprogrammprodukt mit einem Computerprogramm, welches direkt in eine Speichereinheit einer Besetzungsdetektionsvorrichtung (20) ladbar ist, mit Programmabschnitten, um alle Schritte eines Verfahrens nach einem der Ansprüche 1 bis 8 auszuführen, wenn das Computerprogramm in der Besetzungsdetektionsvorrichtung (20) ausgeführt wird.

12. Computerlesbares Medium, auf welchem von einer Rechnereinheit ausführbare Programmabschnitte gespeichert sind, um alle Schritte des Verfahrens nach einem der Ansprüche 1 bis 8 auszuführen, wenn die Programmabschnitte von der Rechnereinheit ausgeführt werden.

## Claims

1. Method for identification of an unoccupied seat (SP) in a passenger transport vehicle (30) with a plurality of seats (SP), having the steps:
- capture of image data (BD) which maps a seat (SP),
- performance of a mathematical image analysis on the basis of the captured image data (BD), wherein analysis data (AD) is generated with the help of the mathematical image analysis,
**characterised by** the steps:
- performance of the mathematical image analysis with regard to seat textures, wherein the generated analysis data (AD) contains information on whether the seat has repeating patterns of seat textures,
- wherein the mathematical image analysis
- comprises a mathematical transformation, preferably an integral transformation or a discrete transformation, with which periodic properties of the seat textures can be made recognizable,
- wherein the mathematical transformation comprises a Fourier transform (2D-FT(BD)) of the captured image data (BD), wherein the captured image data (BD) is transformed into the frequency domain, and
- wherein the analysis data (AD) is generated on the basis of a comparison of the transformed image data (TBD) with transformed pattern image data (TMBD),
or
- comprises a convolution operation, with which periodically recurring patterns in the seat textures are detected,
- determination that the seat (SP) is unoccupied, if on the basis of the analysis data (AD) repeating patterns of seat textures are detected.

2. Method according to claim 1, wherein a correlation operation is applied to the captured image data (BD) as a mathematical image analysis for generating the analysis data (AD), wherein correlation analysis data (AD) is generated as analysis data (AD).

3. Method according to claim 2, wherein the correlation operation comprises a cross-correlation operation.

4. Method according to claim 2, wherein the correlation operation comprises an auto-correlation operation.

5. Method according to claim 1, wherein the comparison comprises the determination of a distance (d) between the transformed image data (TBD) and the transformed pattern image data (TMBD).

6. Method according to claim 5, wherein the distance (d) comprises a Euclidean distance (ED).

7. Method according to claim 5 or 6, wherein a small distance (d) indicates an unoccupied seat (USP) and a large distance (d) indicates an occupied seat (BSP).

8. Method according to one of claims 5 to 7, wherein the magnitude of the value of the distance (d) provides information on the extent to which the seat (SP) is occupied.

9. Occupancy detection device (20) for identification of an unoccupied seat (SP) in a passenger transport vehicle (30) with a plurality of seats (SP), having:
- an input interface (21) for receiving image data (BD) which maps a seat (SP),
- an analysis unit (22) for performing a mathematical image analysis on the basis of the captured image data (BD), wherein analysis data (AD) is generated with the help of the mathematical image analysis,
**characterised by**
- design of the analysis unit (22) for the performance of the mathematical image analysis with regard to seat textures, wherein the generated analysis data (AD) contains information on whether the seat has repeating patterns of seat textures,
- wherein the mathematical image analysis
- comprises a mathematical transformation, preferably an integral transformation or a discrete transformation, with which periodic properties of the seat textures can be made identifiable,
- wherein the mathematical transformation comprises a Fourier transform (2D-FT(BD)) of the captured image data (BD), wherein the captured image data (BD) is transformed into the frequency domain, and
- wherein the analysis data (AD) is generated on the basis of a comparison of the transformed image data (TBD) with transformed pattern image data (TMBD),
or
- comprises a convolution operation, with which periodically recurring patterns in the seat textures are detected,
- a determination unit (24) for determining that the seat (SP) is unoccupied, if on the basis of the analysis data (AD) repeating patterns of seat textures are detected.

10. Passenger transport vehicle (30), preferably a rail vehicle transporting passengers, having
- an occupancy detection device (20) according to claim 9,
- a plurality of seats (SP),
- an image acquisition unit (BAE) for capturing image data (BD) from the seats (SP).

11. Computer program product with a computer program which can be loaded directly into a memory unit of an occupancy detection device (20), with program sections in order to carry out all the steps of a method according to one of claims 1 to 8 if the computer program is executed in the occupancy detection device (20).

12. Computer-readable medium, on which program sections that can be executed by a computer unit are stored in order to carry out all the steps of the method according to one of claims 1 to 8 if the program sections are executed by the computer unit.

## Revendications

1. Procédé d'identification d'une place assise (SP) inoccupée dans un véhicule (30) de transport de personne, comprenant une pluralité de places assises (SP), comportant les stades :
- on saisit des données (BD) d'image, qui représentent une place assise (SP),
- on effectue une analyse mathématique d'image sur la base des données (BD) d'image saisies, dans lequel, à l'aide de l'analyse mathématique d'image, on produit des données (AD) d'analyse,
**caractérisé par** les stades :
- on effectue l'analyse mathématique d'image, en ce qui concerne des textures de place assise, dans lequel les données (AD) d'analyse produites comprennent des informations sur le point de savoir si la place assise a des motifs récurrents de textures de place assise,
- dans lequel l'analyse mathématique d'image
- comprend une transformation mathématique, de préférence une transformation intégrale ou une transformation discrète, par laquelle des propriétés périodiques des textures de place assise sont rendues reconnaissables,
- dans lequel la transformation mathématique comprend une transformation (2D-FT(BD)) de Fourrier des données (BD) d'image saisies, les données (BD) d'image saisies étant transformées dans l'espace fréquentiel, et
- dans lequel on produit les données (AD) d'analyse, sur la base d'une comparaison des données (TBD) d'image transformées à des données (TMBD) d'image de motif transformées,
ou
- comprend une opération de convolution, par laquelle des motifs récurrents périodiquement dans les textures de place assise sont détectés,
- on détermine si la place assise (SP) est inoccupée si, sur la base des données (AD) d'analyse, on détecte des motifs récurrents de textures de place assise.

2. Procédé suivant la revendication 1, dans lequel, comme analyse mathématique d'image pour la production des données (AD) d'analyse, on applique une opération de corrélation aux données (BD) d'image saisies, dans lequel on produit, comme données (AD) d'analyse, des données d'analyse de corrélation.

3. Procédé suivant la revendication 2, dans lequel l'opération de corrélation comprend une opération de corrélation croisée.

4. Procédé suivant la revendication 2, dans lequel l'opération de corrélation comprend une opération d'autocorrélation.

5. Procédé suivant la revendication 1, dans lequel la comparaison comprend la détermination d'une distance (d) entre les données (TBD) d'image transformées et les données (TMBD) d'image de motif transformées.

6. Procédé suivant la revendication 5, dans lequel la distance (d) comprend une distance (ED) euclidienne.

7. Procédé suivant la revendication 5 ou 6, dans lequel une distance (d) petite indique une place assise (USP) inoccupée et une grande distance (d) indique une place assise (BSP) occupée.

8. Procédé suivant l'une des revendications 5 à 7, dans lequel la dimension de la valeur de la distance (d) donne une information sur la mesure, dans laquelle la place assise (SP) est occupée.

9. Installation (20) de détection d'occupation pour l'identification d'une place assise (SP) inoccupée dans un véhicule (30) de transport de personnes ayant une pluralité de places assises (SP), comportant :
- une interface (21) d'entrée de réception de données (BD) d'image, qui représentent une place assise (SP),
- une unité (22) d'analyse pour effectuer une analyse mathématique d'image sur la base des données (BD) d'image saisies, dans lequel on produit des données (AD) d'analyse, à l'aide de l'analyse mathématique d'image,
**caractérisée par**
- une constitution de l'unité (22) d'analyse pour effectuer l'analyse mathématique d'image, en ce qui concerne des textures de place assise, dans lequel les données (AD) d'analyse produites comprennent des informations sur le point de savoir si la place assise a des motifs récurrents de textures de place assise,
- dans lequel l'analyse mathématique d'image
- comprend une transformation mathématique, de préférence une transformation intégrale ou une transformation discrète, par laquelle des propriétés périodiques des textures de place assise sont rendues reconnaissables,
- dans lequel la transformation mathématique comprend une transformation (2D-FT(BD)) de Fourrier des données (BD) d'image saisies, les données (BD) d'image saisies étant transformées dans l'espace fréquentiel, et
- dans lequel on produit les données (AD) d'analyse, sur la base d'une comparaison des données (TBD) d'image transformées à des données (TMBD) d'image de motif transformées,
ou
- comprend une opération de convolution, par laquelle des motifs récurrents périodiquement dans les textures de place assise sont détectés,
- une unité (24) de détermination pour déterminer que la place assise (SP) est inoccupée si, sur la base des données (AD) d'analyse, on détecte des motifs récurrents de textures de place assise.

10. Véhicule (30) de transport de personnes, de préférence véhicule ferroviaire transportant des personnes, comportant :
- une installation (20) de détection d'occupation suivant la revendication 9,
- une pluralité de places assises (SP),
- une unité (BAE) de prise d'image pour la saisie de données (BD) d'image des places assises (SP).

11. Produit de programme d'ordinateur comprenant un programme d'ordinateur, qui peut être chargé directement dans une unité de mémoire d'une installation (20) de détection d'occupation comportant des parties de programme pour effectuer tous les stades d'un procédé suivant l'une des revendications 1 à 8, lorsque l'on réalise le programme d'ordinateur dans l'installation (20) de détection d'occupation.

12. Support déchiffrable par ordinateur, sur lequel sont mises en mémoire des parties de programme pouvant être réalisées par une unité informatique pour effectuer tous les stades du procédé suivant l'une des revendications 1 à 8, lorsque les parties du programme sont réalisées par l'unité informatique.
